# EUROPÄISCHE PATENTSCHRIFT

(11) **EP 0 682 598 B1**
(45) Veröffentlichungstag und Bekanntmachung des Hinweises auf die Patenterteilung: **11.12.1996**
(21) Anmeldenummer: 94904909.2
(22) Anmeldetag: 21.01.1994
(51) Int. Cl.: B29C 65/08, H01M 2/18

(54) **VORRICHTUNG ZUM HERSTELLEN VON SEPARATORENTASCHEN FÜR ELEKTRISCHE AKKUMULATORPLATTEN**
DEVICE FOR PRODUCING SEPARATOR POCKETS FOR ELECTRICAL ACCUMULATOR PLATES
DISPOSITIF POUR LA PRODUCTION DE POCHES DE SEPARATEUR POUR PLAQUES D'ACCUMULATEURS ELECTRIQUES

(30) Priorität: 03.02.1993 AT 186/93
(43) Veröffentlichungstag der Anmeldung: 22.11.1995
(73) Patentinhaber: JUNGFER Gesellschaft m.b.H. & Co. KG, A-9181 Feistritz (AT)
(72) Erfinder: FREY, Helmut, A-9170 Ferlach (AT)
(74) Vertreter: Holzer, Walter, Dipl.-Ing.
(86) Internationale Anmeldenummer: AT9400004
(87) Internationale Veröffentlichungsnummer: WO9417984

(56) Entgegenhaltungen:
- DE-A- 2 932 409
- US-A- 3 294 616
- US-A- 3 505 136
- US-A- 4 026 000
- US-A- 4 866 914

## Beschreibung

Die Erfindung betrifft eine Vorrichtung zum Herstellen von Separatorentaschen für elektrische Akkumulatorplatten, mit einer Einrichtung zum Falten von Abschnitten einer durch Ultraschall verschweißbaren Kunststoff-Materialbahn um jeweils eine Akkumulatorplatte und einer Einrichtung zum Transport der gefüllten Separatorentasche zu Ultraschall-Schweißeinrichtungen, in welchen die übereinanderliegenden offenen Seitenränder der Separatorentasche miteinander verschweißt werden.

Bei bekannten Vorrichtungen zum Eintaschen von Akkumulatorenplatten werden die um je eine Akkumulatorplatte gefalteten, an den Seiten offenen Separatorentaschen taktweise an die aus einer unteren Sonotrode und einem oberen Amboß bestehende Ultraschall-Schweißeinrichtung herangeführt. Die zu verbindenden seitlichen Taschenränder werden zwischen Sonotrode und Amboß gepreßt und die Ultraschall-Schweißverbindung wird durch einen Ultraschallimpuls vorbestimmter Energie und Zeitdauer hergestellt. Der wesentliche Nachteil der bekannten Ausführung besteht im taktweisen Arbeitsablauf, der eine aufwendige Steuerung erfordert und eine relativ geringe Durchsatzleistung zur Folge hat.

Es ist aus der US-PS 4 026 000 auch schon eine Vorrichtung der einleitend angegebenen Art bekannt, die kontinuierlich arbeitet und so einen höheren Durchsatz ermöglicht. Bei der bekannten Vorrichtung, gemäß dem einleitenden Teil des Anspruch 1, arbeitet die Sonotrode gegen einen gegenüberliegenden rotierenden Amboß, dessen Anpreßdruck durch Federkraft einstellbar ist. Die Zufuhr der an den Seiten offenen Separatorentasche erfolgt dabei durch ein Paar von übereinanderliegenden Walzen, welche die zu verschweißende Separatorentasche durch die eigentliche Schweißeinrichtung schieben. Diese Konstruktion hat den Nachteil, daß die zu verschweißenden Seitenränder der Separatorentasche durch das schiebende Einführen in die Schweißzone stark beansprucht und häufig beschädigt werden.

Aus der US-PS 4 866 914 ist es auf dem Gebiet des Verschweißens von einseitig offenen Kunststoffbeuteln an sich bekannt, das offene Ende des Beutels durch eine Sonotrodenanordnung mit Hilfe zweier endloser Transportriemen zu ziehen, die von oben und von unten am Beutel angreifen. Die Sonotrodenanordnung arbeitet taktend. Über die speziellen Probleme des zweiseitigen Verschweißens von Taschen, insbesondere die konstruktive Lösung des Problems einer Anpassung an unterschiedliche Taschenbreiten, gibt diese Schrift keinen Aufschluß.

Die Erfindung zielt darauf ab, eine Vorrichtung der einleitend angegebenen Art zu schaffen, die bei schonender Behandlung der Separatorentaschen einen hohen Ausstoß an zweiseitig verschweißten Taschen verschiedener Breite gestattet. Die erfindungsgemäße Vorrichtung zeichnet sich dadurch aus, daß die Transporteinrichtung oberhalb und unterhalb einer horizontalen Transportebene für die Separatorentaschen sowie symmetrisch zu einer Vorrichtungslängsmittelebene je zwei endlose, synchron angetriebene Transportriemen aufweist, die mit ihren parallel zur Transportebene verlaufenden Trumen gemeinsam an Seitenteilen der Separatorentaschen angreifen und die über die Transportriemen überstehenden, übereinanderliegenden Seitenränder der Separatorentaschen kontinuierlich durch die Ultraschall-Schweißeinrichtungen ziehen, wobei die oberen und unteren Transportriemen jeweils in einem einlaufseitigen und einem auslaufseitigen Seitenschild eines Rahmengestells durch Riemenräder geführt sind, und wobei die Seitenschilde beider Seiten des Rahmengestells mit dem Rahmengestell über eine Einstelleinrichtung zur Einstellung der Schweißrandbreite symmetrisch zur Längsmittelebene der Vorrichtung verstellbar gehalten sind.

Mit der erfindungsgemäßen Vorrichtung wird erreicht, daß die beiden übereinanderliegenden, zu verschweißenden Separatorentaschen mittels der Transportriemen durch die Ultraschall-Schweißeinrichtungen und aus diesen heraus gezogen werden. Da die oberen und unteren Transportriemen synchron umlaufen, ist stets eine gleichbleibende Zugkraft gegeben. Dies ermöglicht eine weitestgehende mechanische Schonung des Schweißgutes bei hohem Durchsatz und geringem Vorrichtungsverschleiß. Die erfindungsgemäße Lagerung der Transportriemen ermöglicht dabei eine genaue Einstellung der Vorrichtung auf die Breite der zu verschweißenden Separatorentaschen.

Eine Weiterbildung der Erfindung, welche die exakte Führung der Separatorentaschen durch die Vorrichtung begünstigt, zeichnet sich dadurch aus, daß oberhalb einer die Transportebene bildenden, an den Seitenschilden befestigten Auflage in Fluchtung mit jedem Transportriemenpaar eine Niederhalterleiste vorgesehen ist, die sich in Transportrichtung der Separatorentaschen vor und hinter jeder Ultraschall-Schweißeinrichtung erstreckt und an der Auflage gegen diese federnd vorgespannt gelagert ist, wobei ihr Grundabstand von der Auflage einstellbar ist.

Zweckmäßig ist in Transportrichtung hinter den Ultraschall-Schweißeinrichtungen je eine Schneideinrichtung zum Besäumen der Separatorentaschen vorgesehen.

Die Erfindung und weitere Merkmale derselben werden nachfolgend an einem Ausführungsbeispiel unter Bezugnahme auf die Zeichnungen näher erläutert, in welchen
Fig. 1 eine Vorrichtung gemäß der Erfindung im Längsschnitt und

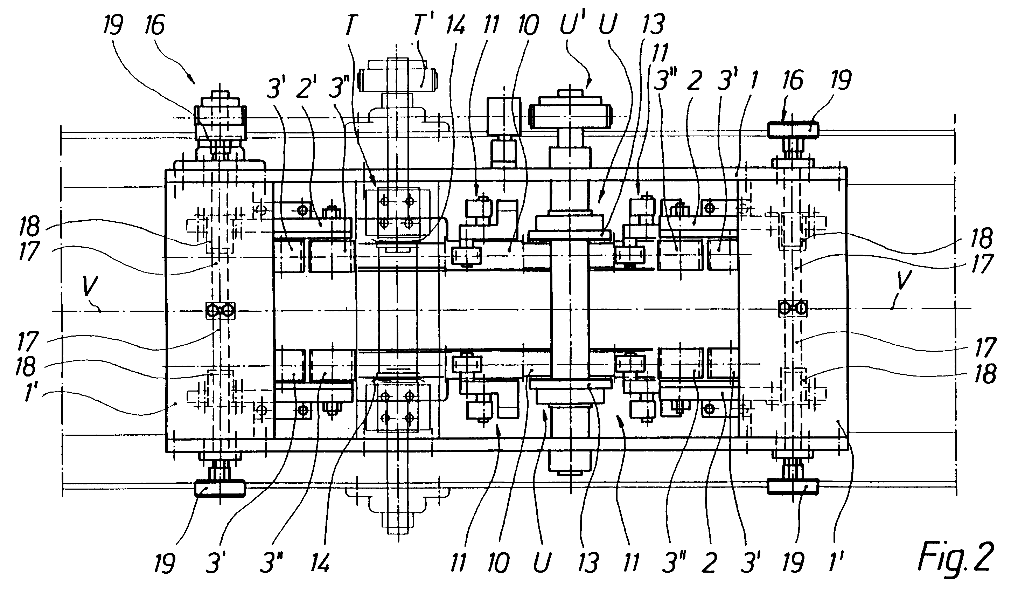

Fig. 2 eine Draufsicht zu Fig. 1 zeigt.

Die in der Zeichnung dargestellte Vorrichtung hat eine Einlaufseite (Pfeil E) für nacheinander zugeführte, je um eine Akkumulatorenplatte gefaltete, an den Seiten und hinten offene Separatorentaschen S, z.B. aus einer Polyethylenfolie (wobei die Falteinrichtung und die Einrichtung zum Zuführen der Akkumulatorenplatten nicht gezeigt sind), sowie eine Auslaufseite (Pfeil A) für die verschweißten Separatorentaschen S.

Die Vorrichtung weist zwei bezüglich einer Vertikalmittelebene V im wesentlichen symmetrische Hälften auf. Seitenteile 1 eines Rahmengestells, in denen alle wesentlichen Vorrichtungskomponenten gelagert sind, sind über mehrere Querteile 1' miteinander verbunden. Jeder Seitenteil 1 trägt oberhalb einer horizontalen Vorschubebene H einen einlaufseitigen Satz C und einen auslaufseitigen Satz D aus je drei, in einem Seitenschild 2 bzw. 2' gelagerten Zahnriemenrädern 3, 3', 3'', um die ein endloser oberer, als Zahnriemen 4 ausgebildeter Transportriemen geschlungen ist, der in Transportrichtung F der Separatorentaschen S umläuft. Das Zahnriemenrad 3 des auslaufseitigen Satzes D sitzt auf einer Antriebswelle M eines nicht gezeigten Motors.

Unterhalb des einlaufseitigen Satzes C und des auslaufseitigen Satzes D von Zahnriemenrädern 3, 3', 3'' ist im Seitenschild 2 bzw. 2' je ein unteres Zahnriemenrad 5 bzw. 5' gelagert, wobei das Rad 5' ebenfalls auf einer Antriebswelle M sitxt. Um die Zahnriemenräder sowie um später erläuterte weitere Zahnriemenräder 6 und eine Spannrolle 7 ist ein unterer, ebenfalls als Zahnriemen 8 ausgebildeter Transportriemen geschlungen, der gemeinsam mit dem oberen Zahnriemen 4 eine an den zu verschweißenden Seitenteilen der Separatorentaschen S angreifende Transporteinrichtung bildet. Die beiden Zahnriemen 4, 8 sind synchron über die Zahnriemenräder 3, 5' angetrieben und üben auf die zu verschweißenden Separatorentaschen eine kontinuierliche gleichbleibende Zugkraft in der Transportrichtung aus.

An den Seitenschilden 2, 2' jeder Rahmengestellseite ist eine die der Vorschubebene H bildende Horizontalauflage 9 für die Separatorentaschen S montiert, die eine Niederhalterleiste 10 für die Seitenteile der Separatorentaschen trägt, die gegen die Auflage 9 mittels zweier Federvorspannmechanismen 11 federnd vorgespannt ist und unter welcher das untere Trum des oberen Zahnriemens 4 läuft. Die Niederhalterleiste 10 fluchtet mit den Zahnriemenrädern 3, 3', 3'' und hat die Aufgabe, die zwischen den Zahnriemen 4, 8 erfaßten Seitenteile der Separatorentaschen mit einem mittels der Federn der Vorspannmechanismen 11 einstellbaren vorbestimmten Druck in gegenseitiger Anlage zu halten. Die über die Niederhalterleiste 10 überstehenden, zu verschweißenden Ränder der Separatorentaschen S werden durch je eine seitliche, außerhalb der Niederhalterleiste 10 angeordnete Ultraschall-Schweißeinrichtung U hindurchgezogen, die eine vertikale untere Sonotrode 12 und einen mit dieser zusammenwirkenden oberen Amboß 13 aufweist, der als kontinuierlich drehende Kreisscheibe ausgebildet und auf einer Achse mit dem anderen Amboß in den Seitenteilen 1 drehbar gelagert und über einen Antrieb U' angetrieben ist. Die Auflage 9 trägt an ihrer Unterseite in Transportrichtung vor und hinter der Schweißeinrichtung U die beiden Zahnräder 6, welche das untere Trum des Zahnriemens 8 führen.

Die Federvorspannmechanismen 11 der Niederhalterleiste 10 sind je durch einen von unten mittels einer Feder 11' belasteten, um einen Schwenkzapfen 11'' schwenkbaren Kipparm 11''' gebildet, wobei die Federvorspannung mittels einer Schraube 11^{Iv} einstellbar ist.

Die an der Einlaufseite E nacheinander einlaufenden, je mit einer Akkumulatorenplatte gefüllten Separatorentaschen S werden mit Hilfe der Zahnriemenpaare 4, 8 fortlaufend unter die beiden Niederhalterleisten 10 gezogen, die dabei federnd etwas angehoben werden und die Seitenteile der Separatorentasche mit dem eingestellten Druck beaufschlagen, und durchlaufen die Ultraschall-Schweißeinrichtungen U, die kontinuierlich arbeiten. Die verschweißten Separatorentaschen S durchlaufen dann vor dem auslaufseitigen Zahnriemensatz D Seitenschneideinrichtungen T, die je ein Paar von oberen und unteren Schneidrädern 14 auf einer in den Seitenteilen 1 gelagerten Achse mit Antrieb T' aufweisen, mit welchen die verschweißten Taschenseitenränder getrimmt werden. Nach dem Verlassen der Vorrichtung werden die dreiseitig geschlossenen Separatorentaschen von einem Austragförderer B aufgenommen.

Im Bereich jeder Seitenschneideinrichtung ist an einem mit der zugeordneten Auflage 8 verbundenen Träger 15 die Spannrolle 7 gelagert.

Die die Zahnriemenräder lagernden Seitenschilde 2, 2' des Rahmengestells 1, 1' sind symmetrisch zur Längsmittelebene der Vorrichtung relativ zueinander einstellbar, u.zw. mittels einer Breiteneinstelleinrichtung 16, die zwei gegenläufige Spindeln 17 aufweist, welche mit den Seitenschilden 2, 2' über an diesen befestigte Muttern 18 in Eingriff stehen und je mittels eines Handrades 19 betätigbar sind, um die Schilde 2, 2' samt den von diesen getragenen Komponenten, insbesondere die Zahnriemen 4, 8 der Breite der Vorrichtung genau auf die Breite der zu verschweißenden Separatorentaschen einstellen zu können.

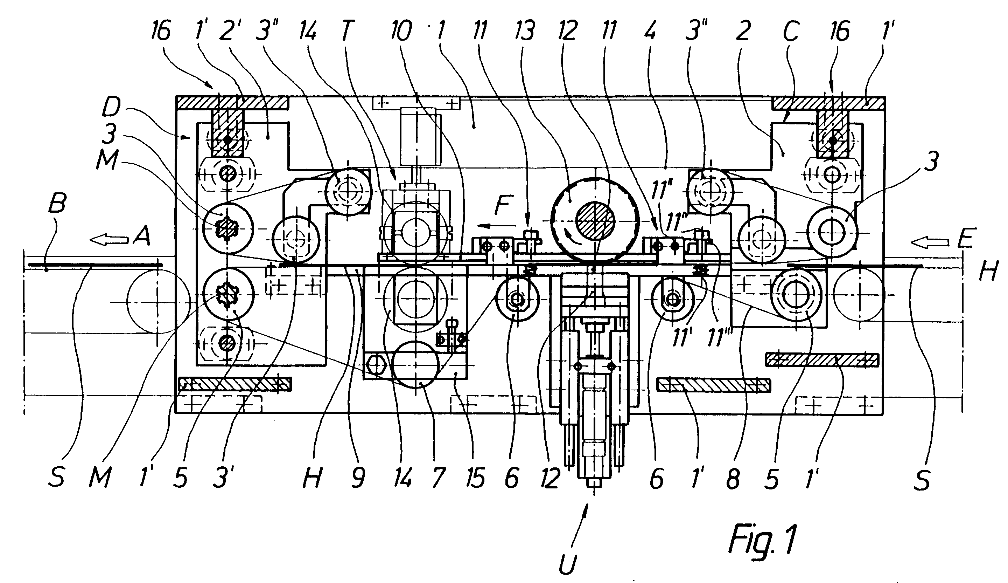

Wie Fig. 1 zeigt sind die Zahnriemenräder 3', 3'' in den zugeordneten Seitenschilden 2, 2' mittels eines Winkels um die Achse des oberen Zahnriemenrades 3'' pendelnd aufgehängt, um das Ein- und Auslaufen der Separatorentasche zu erleichtern.

Der jeweilige Schweißspalt der Ultraschall-Schweißeinrichtungen U ist durch Höhenverstellung der Sonotroden 12 einstellbar.

Es versteht sich, daß das erläuterte Ausführungsbeispiel im Rahmen des allgemeinen Erfindungsgedankens verschiedentlich abgewandelt werden kann.

## Patentansprüche

1. Vorrichtung zum Herstellen von Separatorentaschen für elektrische Akkumulatorplatten, mit einer Einrichtung zum Falten von Abschnitten einer durch Ultraschall verschweißbaren Kunststoff-Materialbahn um jeweils eine Akkumulatorplatte und einer Einrichtung zum Transport der gefüllten Separatorentasche zu Ultraschall-Schweißeinrichtungen, in welchen die übereinanderliegenden Seitenränder der Separatorentaschen miteinander verschweißt werden, dadurch gekennzeichnet, daß die Transporteinrichtung oberhalb und unterhalb einer horizontalen Transportebene (H) für die Separatorentaschen (S) sowie symmetrisch zu einer Vorrichtungslängsmittelebene je zwei endlose, synchron angetriebene Transportriemen (4, 8) aufweist, die mit ihren parallel zur Transportebene (H) verlaufenden Trumen gemeinsam an Seitenteilen der Separatorentaschen (S) angreifen und die über die Transportriemen überstehenden, übereinanderliegenden Seitenränder der Separatorentaschen kontinuierlich durch die Ultraschall-Schweißeinrichtungen (U) ziehen, wobei die oberen und unteren Transportriemen (4, 8) jeweils in einem einlaufseitigen und einem auslaufseitigen Seitenschild (2 bzw. 2') eines Rahmengestells durch Riemenräder geführt sind, und wobei die Seitenschilde (2, 2') beider Seiten des Rahmengestells (1, 1') mit dem Rahmengestell über eine Einstelleinrichtung (15) zur Einstellung der Schweißrandbreite symmetrisch zur Längsmittelebene der Vorrichtung verstellbar gehalten sind.

2. Vorrichtung nach Anspruch 1, dadurch gekennzeichnet, daß oberhalb einer die Transportebene (H) bildenden, an den Seitenschilden (2, 2') befestigten Auflage (9) in Fluchtung mit jedem Transportriemenpaar (4, 8) eine Niederhalterleiste (10) vorgesehen ist, die sich in Transportrichtung der Separatorentaschen (S) vor und hinter jeder Ultraschall-Schweißeinrichtung (U) erstreckt und an der Auflage (9) gegen diese federnd vorgespannt gelagert ist, wobei ihr Grundabstand von der Auflage einstellbar ist.

3. Vorrichtung nach Anspruch 1 oder 2, dadurch gekennzeichnet, daß in Transportrichtung hinter den Ultraschall-Schweißeinrichtungen (U) je eine Schneideinrichtung (T) zum Besäumen der Separatorentaschen (S) vorgesehen ist.

4. Vorrichtung nach einem der Ansprüche 1 bis 3, dadurch gekennzeichnet, daß in jedem einlaufseitigen und auslaufseitigen Seitenschild (2 bzw. 2') ein Paar von oberen Zahnriemenrädern (3', 3'') pendelnd gelagert ist.

## Claims

1. Device for producing separator pockets for electrical accumulator plates, comprising a means for folding sections of a web of ultrasonically weldable plastic material around each accumulator plate and a means for conveying the filled separator pocket to ultrasonic welding units where the superimposed side edges of the separator pockets are welded together, characterised in that the conveying means has two synchronised endless conveyor belts (4, 8) arranged above and below a horizontal conveying plane (H) for the separator pockets (S) and symmetrically to a longitudinal centre plane of the device, the belt sections extending parallel to the conveying plane (H) jointly gripping side parts of the separator pockets (S) and pulling the superimposed side edges of the separator pockets projecting beyond the conveyor belts continuously through the ultrasonic welding units (U), the upper and lower conveyor belts (4, 8) being guided by means of belt pulleys in respective side shields (2 and 2') of a frame at the inlet end and at the outlet end, and the side shields (2, 2') of both sides of the frame (1, 1') being adjustably held on the frame by means of an adjusting means (15) for adjusting the width of the weld edge symmetrically to the longitudinal centre plane of the device.

2. Device according to claim 1, characterised in that a holding-down bar (10) is provided above a support (9) forming the conveying plane (H) and secured to the side shields (2, 2') aligned with each pair of conveyor belts (4, 8), said holding-down bar extending in front of and behind each ultrasonic welding unit (U) in the conveying direction of the separator pockets (S) and being mounted on the support (9) so that it is spring-loaded relative thereto, its basic distance from the support being adjustable.

3. Device according to claim 1 or claim 2, characterised in that respective cutting means (T) for trimming the separator pockets (S) are provided behind the ultrasonic welding units (U) in the conveying direction.

4. Device according to one of claims 1 to 3, characterised in that a pair of upper synchronous belt pulleys (3', 3'') are arranged to oscillate in each side shield (2 and 2') at the inlet end and at the outlet end.

## Revendications

1. Dispositif pour fabriquer des poches de séparateurs pour des plaques d'accumulateurs électriques, comportant un dispositif pour replier des parties d'une bande de matière plastique pouvant être soudées par ultrasons, autour respectivement d'une plaque d'accumulateur, et un dispositif pour transporter la poche de séparateur remplie jusqu'à des dispositifs de soudage par ultrasons, dans lesquels les bords latéraux superposés des poches de séparateurs sont réunis par soudage, caractérisé en ce que le dispositif de transport comporte au-dessus et au-dessous d'un plan horizontal de transport (H) pour les poches de séparateurs (S) ainsi que symétriquement par rapport à un plan médian longitudinal du dispositif, respectivement deux courroies de transport sans fin (4,8) entraînées de façon synchrone et qui s'appliquent en commun, par leurs brins qui sont parallèles au plan de transport (H), contre des parties latérales des poches de séparateurs (S) et tirent de façon continue les bords latéraux des poches de séparateurs, qui sont superposées et sont disposées en surplomb au-dessus des courroies de transport, à travers les dispositifs de soudage à ultrasons (U), les courroies de transport supérieure et inférieure (4,8) étant guidées respectivement dans un flasque latéral situé côté entrée et dans un flasque latéral situé côté sortie (2 ou 2') d'un châssis en forme de cadre, par des poulies, les flasques latéraux (2,2') des deux côtés du châssis en forme de cadre (1,1') étant retenus, avec le châssis en forme de cadre, de manière à être déplaçables symétriquement par rapport au plan médian longitudinal du dispositif, par l'intermédiaire d'un dispositif de réglage (15) servant a régler la largeur de bord de soudage.

2. Dispositif selon la revendication 1, caractérisé en ce qu'au-dessus d'un support (9), qui forme le plan de transport (H) et est fixé aux flasques latéraux (2,2') est prévue d'une manière alignée avec chaque couple (4,8) de courroies de transport, une barrette de serrage (10), qui s'étend, dans la direction de transport des poches de séparateurs (S), en avant et en arrière de chaque dispositif de soudage à ultrasons (U) et est supportée par le support (9) en étant précontrainte élastiquement contre ce dernier, sa distance de base par rapport au support étant réglable.

3. Dispositif selon la revendication 1 ou 2, caractérisé en ce qu'un dispositif respectif de coupe (T) servant à découper à largeur les poches de séparateurs (S) est prévu en arrière des dispositifs de soudage à ultrasons (U) dans la direction de transport.

4. Dispositif selon l'une des revendications 1 à 3, caractérisé en ce qu'un couple de poulies supérieures (3',3'') pour courroies dentées est monté de manière à pouvoir avoir un déplacement pendulaire dans chacun des flasques latéraux (2 ou 2'), situé côté entrée ou côté sortie.
